# EUROPÄISCHE PATENTSCHRIFT

(11) **EP 1 288 044 B1**
(45) Veröffentlichungstag und Bekanntmachung des Hinweises auf die Patenterteilung: **27.02.2008**
(21) Anmeldenummer: 02019257.1
(22) Anmeldetag: 28.08.2002
(51) Int. Cl.: B60J 7/08, B60J 7/16

(54) **Dachlukenanordnung für Fahrzeuge**
Hatch roof assembly for vehicles
Structure de tabatière pour véhicules

(30) Priorität: 29.08.2001 US 945556
(43) Veröffentlichungstag der Anmeldung: 05.03.2003
(73) Patentinhaber: DEERE & COMPANY, Moline, Illinois 61265-8098 (US)
(72) Erfinder: Arthur, John Raymond, Grovetown, GA 30813 (US); Ondayko, Michael Robert, Plymouth, MI 48170 (US); Strong, Russell William, Craftsbury Common,Vermont 05827 (US); Knight, Daniel James, Lexington, KY 40513 (US); Hartweg, Robert Orval, Wilmore, KY 04390 (US)
(74) Vertreter: Magin, Ludwig Bernhard

(56) Entgegenhaltungen:
- US-A- 4 119 340
- US-B1- 6 220 656
- PATENT ABSTRACTS OF JAPAN vol. 2000, no. 10, 17. November 2000 (2000-11-17) -& JP 2000 198357 A (KOMATSU LTD), 18. Juli 2000 (2000-07-18)

## Beschreibung

Die Erfindung betrifft eine Dachlukenabdeckung für ein Fahrzeug, insbesondere ein Nutzfahrzeug, mit einer Blende und einem Fensterelement mit einer durchsichtigen Scheibe zur Abdeckung einer Dachluke, wobei sowohl das Fensterelement als auch die Blende mit dem Dach schwenkbar verbindbar ist und wobei die Blende zumindest bereichsweise oberhalb des Fensterelements angeordnet ist.

Es ist bekannt Kabinen für Fahrzeuge, insbesondere auch für Nutzfahrzeuge, mit Dachluken auszustatten, die durch ein durchsichtiges Fensterelement, welches gekippt bzw. verschwenkt und in einer oder mehreren Stellungen festgelegt werden kann, verschlossen werden können. Üblicherweise erlaubt es ein solches Fensterelement einer Bedienungsperson Fahrzeugfunktionen, wie das Anheben eines Laders oder andere Hebezeuge, zu beobachten. Darüber hinaus kann das Fensterelement teilweise geöffnet oder entfernt werden, um eine bessere Kabinenbelüftung zu bewirken. Solche Fensterelemente weisen häufig eine durchscheinende Scheibe auf, welche schwenkbar mit dem Dach verbunden ist und zwei Stellungen einnehmen kann. Das Fensterelement ist mit dem Dach über ein Scharnier verbunden. Eine solche Anordnung weist den Nachteil auf, dass sie die Sicht nach vorn auf ein Arbeitsgerät zumindest teilweise behindern kann. Darüber hinaus wird eine Bedienungsperson bei der Verwendung von durchsichtigen oder durchscheinenden Fensterelementen einer erhöhten Sonneneinstrahlung sowie bei einem vollständig oder teilweise geöffneten Fensterelement Witterungseinflüssen, wie Kälte, Regen, Schnee etc. ausgesetzt. Derartige Anordnungen können beispielsweise dem Prospekt von Deutz-Fahr mit dem Titel "Agroplus" sowie von Renault mit dem Titel "Die Kompakten von RENAULT" sowie den Patentschriften US 4,415,197 und JP 2000-198 357 entnommen werden.

Die der Erfindung zugrunde liegende Aufgabe wird darin gesehen, die genannten Probleme zu überwinden.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird eine Dachlukenabdeckung mit einer Blende und einem Fensterelement, welches unterhalb der Blende angeordnet ist, zur Verfügung gestellt, wobei sowohl das Fensterelement wie auch die Blende mehrere Stellungen einnehmen kann. Um eine gemeinsame Bewegung des Fensterelements und der Blende zu ermöglichen, weisen das Fensterelement und die Blende eine gemeinsame Schwenkachse auf. Diese gemeinsame Schwenkachse ermöglicht es, dass das Fensterelement sowohl zusammen mit als auch unabhängig von der Blende verschwenkt werden kann, wodurch einer Bedienungsperson eine Auswahl an Einstellmöglichkeiten zur Verfügung steht.

Vorzugsweise ist die Dachluke bzw. die Dachlukenabdeckung mit Bezug auf einen Bedienersitz über Kopf angeordnet, so dass eine Sicht auf einen angehobenen Frontlader bzw. dessen Arbeitswerkzeug möglich ist.

Die mit dem Dach vorzugsweise wie das Fensterelement über ein Scharnier verbundene Blende kann das Fensterelement zumindest bereichsweise vorzugsweise aber zumindest im Wesentlichen vollständig überdecken.

Die Dachlukenabdeckung kann eine Verrieglungseinrichtung aufweisen, welche vom Inneren einer durch das Dach abgedeckten Kabine erreichbar ist, und der Blende und das Fensterelement derart verbinden kann, dass eine gemeinsame Bewegung möglich ist, wenn die Verriegelungseinrichtung bzw. ein Griff der Verriegelungseinrichtung sich in einer ersten Stellung befindet. In einer weiteren Stellung erlaubt es die Verriegelungseinrichtung dem Fensterelement, unabhängig von der Blende teilweise zu öffnen oder zu schließen. Dies kann insbesondere bei Wetterbedingungen wie Regen hilfreich sein, wobei eine Bedienungsperson das Fensterelement von der Blende trennt und das Fensterelement für ein Optimum an Schutz und/oder Lüftung positioniert.

Die Blende kann durch Streben, welche vorzugsweise in der Art von Gaszylindern ausgebildet sind, abgestützt werden, welche eine maximale Öffnung der Blende begrenzen. Es ist aber auch die Verwendung federbelasteter Streben denkbar. Die Blende dient mit Bezug auf das Fensterelement als Schutz. Wenn sie geschlossen ist, bietet sie ein Maximum an Wetterschutz für eine Bedienungsperson. Wenn sie geöffnet ist, kann eine angehobene Regenrinne um den Umfang der Luke einen zusätzlichen Wetterschutz für die Bedienungsperson bieten. Wünscht die Bedienungsperson eine vollständig geöffnete Dachluke, so kann die Verriegelungseinrichtung in eine Stellung gedreht werden, welche das Fensterelement mit der Blende verbindet. Die Streben unterstützen ein Öffnen des Fensterelements und der Blende in eine vollständig geöffnete Stellung. In Abhängigkeit von der Anordnung des Fahrzeugs, kann die Blende auch in dieser Stellung Schutz vor Sonneneinstrahlung und Niederschlag bieten.

Eine alternative Ausführungsform der Blende stellt entlang einer Vorderseite der Blende Leuchtmittel zur Verfügung. Wird ein angehobenes Anbaugerät, wie ein Lader in einer Umgebung eingesetzt, in der es an passender Beleuchtung mangelt, kann die Blende gelöst werden, um die Beleuchtung direkt in Richtung des Anbaugeräts bzw. der durchzuführenden Arbeiten zu richten.

Die vorliegende Erfindung stellt eine optisch ansprechende Dachlukenabdeckung zur Verfügung, welche sich in das Fahrzeugdach einfügt. Darüber hinaus liefert die Erfindung einer Bedienungsperson eine Vielzahl von unterschiedlichen Einstellpositionen der Dachlukenabdeckung bzw. der Blende und des Fensterelements, wodurch ein Maximum an Komfort zur Verfügung gestellt wird. Darüber hinaus wird die Sonneneinstrahlung in der Kabine reduziert. Die Blende stellt sowohl bei geschlossenem wie auch geöffnetem Fensterelement bei unterschiedlichen Wetterbedingungen einen gewissen Schutz zur Verfügung. Die Blende ermöglicht eine manuelle Bedienung und reduziert damit die Kosten, die durch ein Vorsehen einer motorbetriebenen Abdeckung anfallen. Die Blende kann darüber hinaus mit Beleuchtungseinrichtungen versehen werden.

Eine Vielzahl weiterer Vorteile und Merkmale der vorliegenden Erfindung wird durch die folgende detaillierte Beschreibung der Erfindung und der Ausführungsformen, durch die Ansprüche sowie die folgende Zeichnung offensichtlich werden.

In der Zeichnung ist ein nachfolgend näher beschriebenes Ausführungsbeispiel der Erfindung dargestellt. Es zeigt:
- Fig. 1: eine Seitenansicht eines Fahrzeugs mit einer Blende und einem Fensterelement,
- Fig. 2: eine Explosionsdarstellung eines Dachs des Fahrzeugs aus Fig. 1,
- Fig. 3: eine Explosionsdarstellung entsprechend Fig. 2 von unten betrachtet,
- Fig. 4: eine vergrößerte Darstellung eines Bereichs aus Fig. 2,
- Fig. 5: eine perspektivische Darstellung einer Verriegelungseinrichtung,
- Fig. 6: ein perspektivische Teilansicht eines Dachs entsprechend Fig. 2, wobei die Blende geschlossen ist,
- Fig. 7: eine perspektivische Darstellung des Dachs aus Fig. 2, wobei die Blende teilweise geöffnet und das Fensterelement geschlossen ist,
- Fig. 8: eine Darstellung entsprechend Fig. 7, wobei die Blende vollständig geöffnet und das Fensterelement geschlossen ist,
- Fig. 9: eine Darstellung entsprechend Fig. 7, wobei die Blende und das Fensterelement teilweise geöffnet sind,
- Fig. 10A: eine vergrößerte Darstellung der Verriegelungseinrichtung,
- Fig. 10B: einen Griff, welcher mit der Verriegelungseinrichtung zusammenwirken kann,
- Fig. 11: eine Teilansicht, welche den Griff aus Fig. 10A, das Fensterelement und die Blende zeigt,
- Fig. 12: eine Ansicht der Blende, des Fensterelements und des Griffs in geschlossenem Zustand,
- Fig. 13: eine fragmentarische Seitenansicht einer mit der Blende verbundenen Strebe,
- Fig. 14A -C: ein allmähliches Angreifen der Verriegelungseinrichtung aus Fig. 10A an der Blende,
- Fig. 15A - C: ein Lösen der Verriegelungseinrichtung von der Sonnenblende und
- Fig. 16: eine Teilansicht im Wesentlichen entlang der Linie 16-16 aus Fig. 12, wobei eine Halterung der Blende aus Gründen der Übersichtlichkeit nicht gezeigt wird.

Obwohl die vorliegende Erfindung viele verschiedene Ausführungsformen umfasst, wird in der Zeichnung eine bestimmte Ausführungsform in dem Verständnis gezeigt und im Text genau beschrieben werden, dass die vorliegende Offenbarung als ein Beispiel des Prinzips der Erfindung betrachtet werden soll und nicht dazu gedacht ist, die Erfindung auf die bestimmte, dargestellte Ausführungsform zu begrenzen.

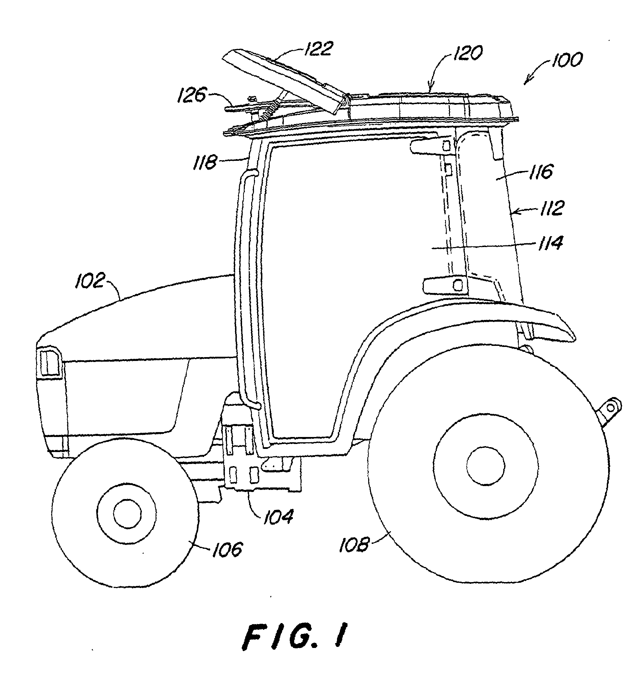

Figur 1 zeigt ein Fahrzeug 100, wie beispielsweise einen Traktor, das eine Haube 102, welche einen Motor (nicht dargestellt) des Fahrzeugs 100 abdeckt, und ein Chassis oder einen Rahmen 104 aufweist, welcher sich auf vorderen Rädern 106 und größeren rückwärtigen Rädern 108 abstützt. Eine Kabine 112 wird durch den Rahmen 104 getragen und ist im Wesentlichen durch Glasscheiben 114, 116 auf einer Außenseite des Fahrzeugs 10 und ähnlichen Scheiben (nicht gezeigt) auf einer gegenüberliegenden Seite des Fahrzeugs 10 und einer Windschutzscheibe 118 auf einer Vorderseite der Kabine 112 umschlossen. Ein Dach 120 schließt einen oberen Bereich der Kabine 112 ab. Ein zu öffnendes Dachelement oder eine Blende 122 ist in einer aufgeklappten Stellung dargestellt. Unterhalb der Blende 122 ist ein durchsichtiges Fensterelement 126 angeordnet, welches in einer aufgeklappten Stellung gezeigt wird.

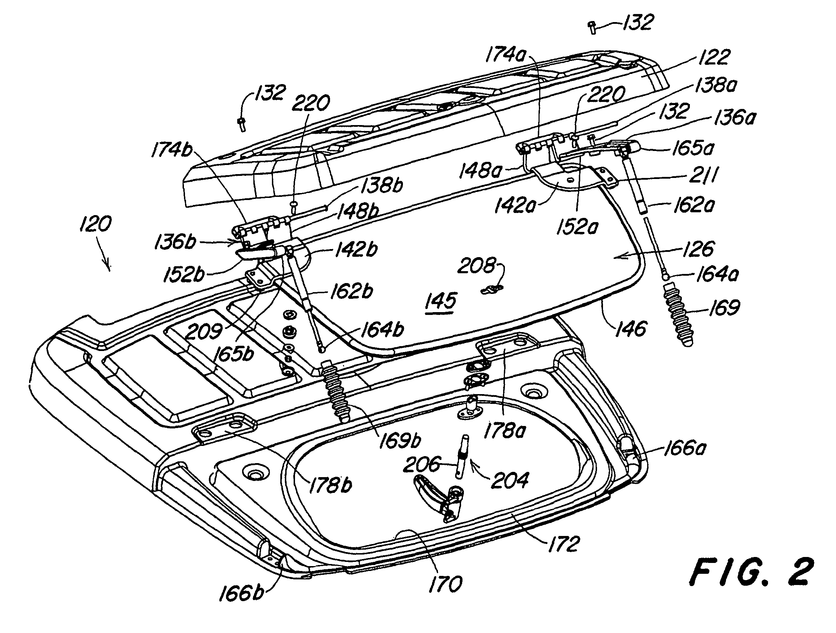

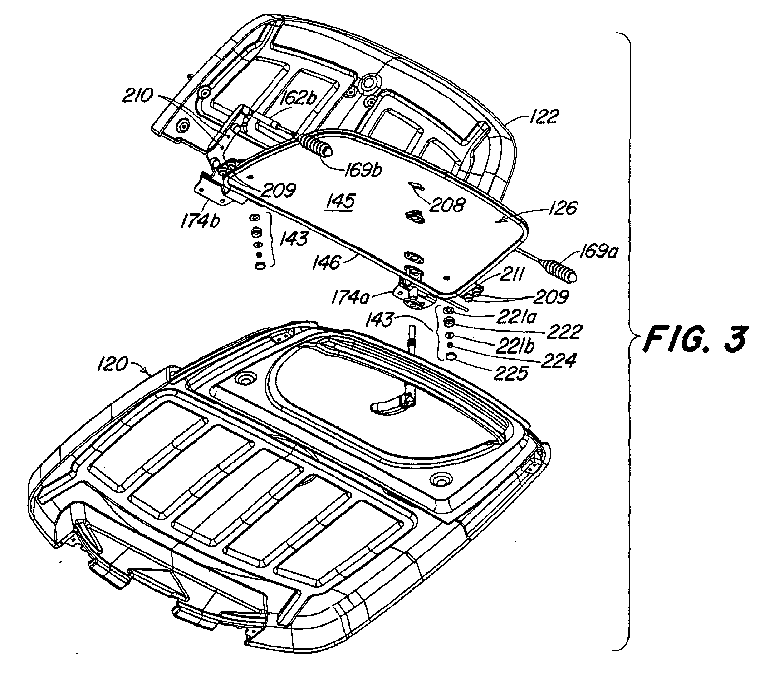

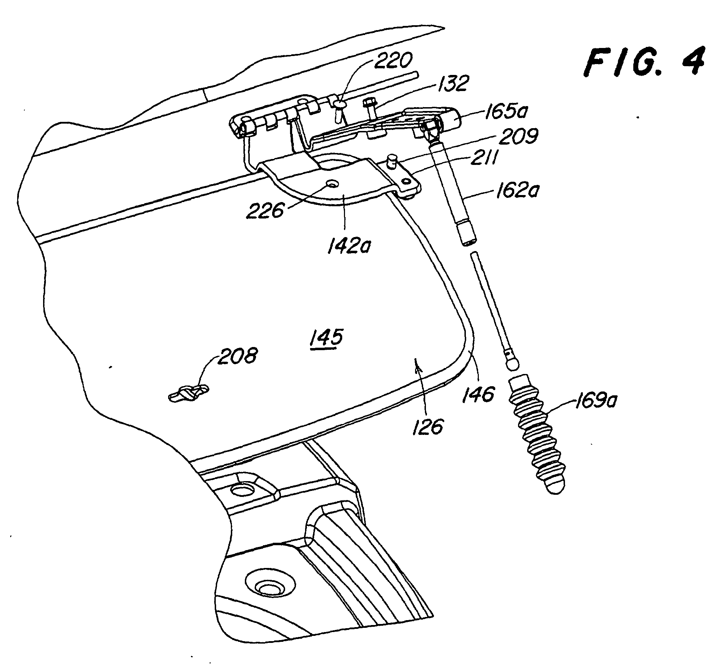

Die Figuren 2-4 zeigen das Dach 120 in Explosionsdarstellung. Die Blende 122 ist mittels Schrauben 132 an Scharnieren 136a, 136b angebracht, welche an gegenüberliegenden Endbereichen der Blende 122 vorgesehen sind. Die Scharniere 136a, 136b sind im Wesentlichen L-förmig und schwenken um Scharnierstifte 138a, 138b. Das Fensterelement 126 ist an entsprechend geformten Scharnieren 142a, 142b über Befestigungseinrichtungen 143, welche im Folgenden beschrieben und in Fig. 3 gezeigt werden, angebracht. Die Scharniere 142a, 142b sind spiegelbildlich ausgebildet. Die Fensterscheibe 126 weist eine durchsichtige Glasscheibe, Kunststoffscheibe bzw. allgemein eine Scheibe 145 auf, welche von einer Dichtung 146, beispielsweise einer Gummidichtung, umgeben wird.

Die Scharniere 142a, 142b weisen einen Abschlussarm 148 auf, welcher schwenkbar durch entsprechende Scharnierstifte 138, 138b getragen wird. Auf diese Weise werden die Blende 122 und das Fensterelement 126 um dieselben Scharnierstifte 138a, 183b geschwenkt. Die Blende 122 und die Fensterscheibe 126 können somit zusammen oder getrennt um dieselbe Achse schwenken.

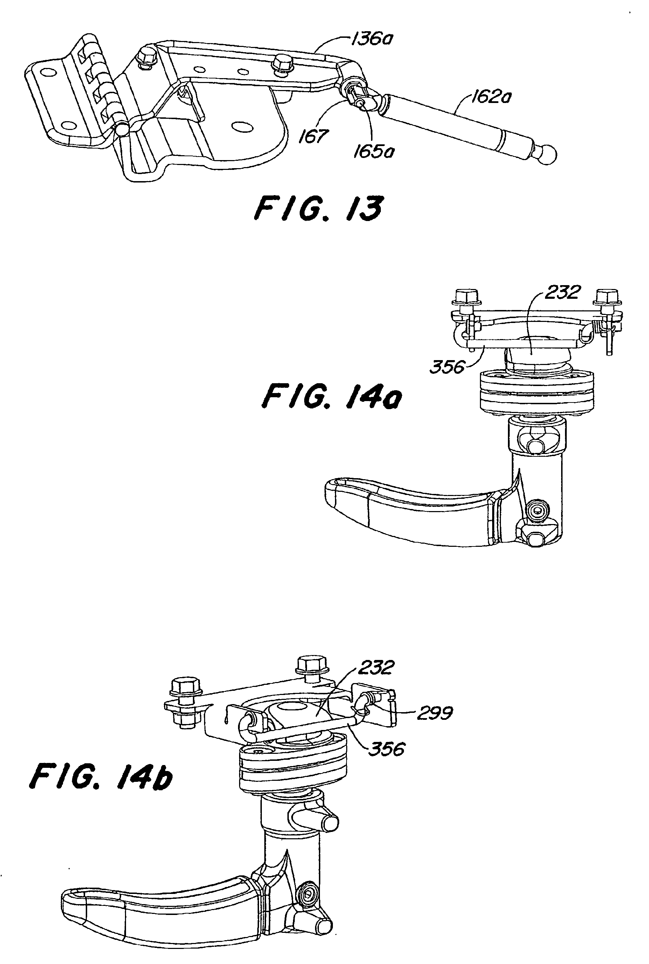

Längliche Schenkel 152a, 152b der L-förmigen Scharniere 136a, 136b weisen Zapfen 165a, 165b zur entsprechenden Aufnahme von klippartigen Endbereichen 167 von Gaszylindern bzw. Streben 162a, 162b auf. Ein üblicher klippartiger Endbereich 167, welcher an einen Zapfen 165a angeklemmt ist, wird in Fig. 13 dargestellt. Der Endbereich 167 ist C-förmig ausgebildet, um an dem Zapfen 165a lösbar zu klemmen und um ein Drehen eines Endbereichs des Zapfens 165a zu erlauben. Gegenüberliegende Kugelgelenke 164a und 164b der Streben 162a, 162b passen in Sockel 166a, 166b des Dachs 120 angrenzend an eine umrahmte Öffnung oder Dachluke 170 des Dachs 120. Über die Streben 162a, 162b sind Gummimuffen geschoben, um einen gewissen Wetterschutz zu bieten. Es ist eine Umfangsdichtung 172 vorgesehen, die mit der Dichtung 146 an dem Fensterelement 126 in einer geschlossenen Stellung zusammenwirkt.

Die Scharnierstifte 138a, 138b sind an Scharnierbasen 174a, 174b vorgesehen, welche durch Schrauben an zurückgesetzten Flächen 178a, 178b, welche entsprechend in das Dach 120 eingeformt sind, angebracht werden.

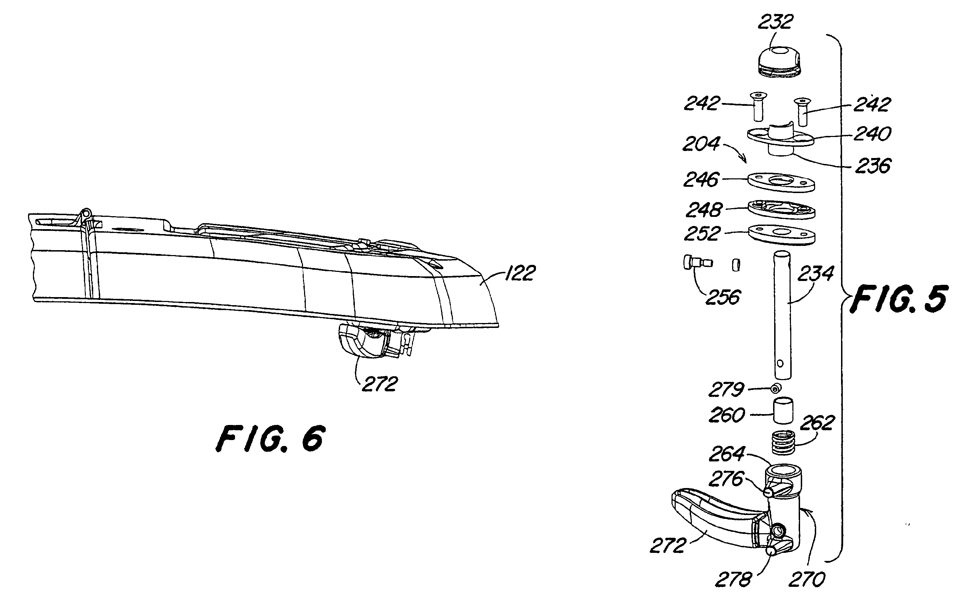

Es wird eine Verriegelungseinrichtung 204 zur Verfügung gestellt, welche mehrere Stellungen einnehmen kann. Die Verriegelungseinrichtung 204 weist eine Achse 206 auf, welche sich durch die Bauteile der Verriegelungseinrichtung und auch durch eine Öffnung 208 des Fensterelements 126 hindurch erstreckt. Die Verriegelungseinrichtung 204 wird in Figur 5 gezeigt und anhand dieser genauer beschrieben.

In Öffnungen von sich nach außen erstreckenden Anschlägen 211 jedes der Scharniere 142a, 142b werden Befestigungsmittel 209 aufgenommen, welche so lang sind, dass sie in fluchtende Öffnungen 210 in den länglichen Schenkeln 152a, 152b der Scharniere 136a, 136b eingesteckt werden, um die Scharniere 142a, 142b, mit den Scharnieren 136a, 136b zu verbinden. Wenn dies geschehen und die Blende 122 entfernt ist, können die Streben 162a, 162b, welche mit den Scharnieren 136a, 136b verbunden sind, verwendet werden, um ein Anheben des Fensterelements 126 anstatt ein Anheben der Blende 122 zu unterstützen.

Das Fensterelement 126 ist an entsprechend geformten Scharnieren 142a, 142b durch Befestigungsvorrichtungen 143 angebracht. Jede der Befestigungsvorrichtungen 143 weist ein Befestigungsmittel 220 (Fig. 2) und mehrere übereinander angeordnete Bauteile, wie Unterlegscheiben 221a, 221b, eine Dichtung 222, eine Mutter 224 und eine Kunststoffkappe 225 zur Abdeckung der Mutter 224 (Fig. 3) auf. Die Unterlegscheiben 221a, 221b sind auf gegenüberliegenden Seiten der Scheibe 145 angeordnet. Die Dichtung 222 ist direkt unterhalb der oberen Unterlegscheibe 221a auf der Scheibe 145 angeordnet. Die Befestigungsmittel 220 durchdringen eine Öffnung 226 durch jedes entsprechende Scharnier 142a, 142b, eine Öffnung in der Scheibe 145, und die Unterlegscheiben 221a, 221b und die Dichtung 222. Das Befestigungsmittel 220 wird in die Mutter 224 eingeschraubt. Die Mutter 224 wird angezogen und mit der Kunststoffkappe 225 abgedeckt. Das Fensterelement 126 ist somit sicher mit den entsprechenden Scharnieren 142a, 142b verbunden.

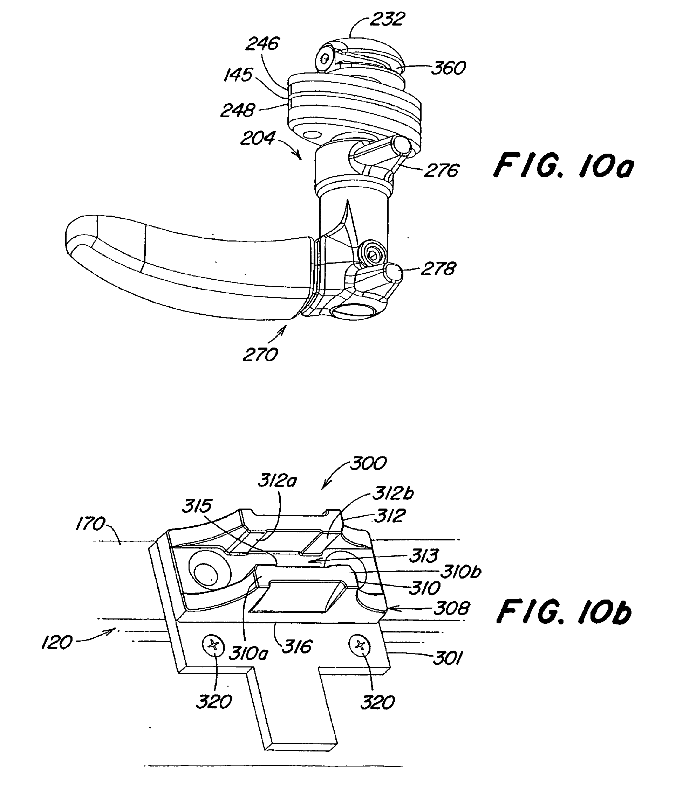

Die Figuren 5 und 10A zeigen die Verrieglung 204. Die Verriegelungseinrichtung 204 weist ein oberes Hakenelement 232, welches an der Welle 206 angebracht ist, auf. Die Welle 206 passt durch ein Lager 260 in einen Kragen 236, welcher an einem Flansch 240 angebracht ist. Der Flansch 240 weist Befestigungsmittelöffnungen zur Aufnahme von zwei Befestigungsmitteln 242 auf. Eine Dichtung 246 und eine Dichtung 248 sind auf einer Oberseite und einer Unterseite des Fensterelements 126 entsprechend angeordnet. Unterhalb des Fensterelements 126 ist ein unterer Flansch 252 vorgesehen, welcher die Befestigungsmittel 242 in mit Gewinden versehenen Öffnungen aufnimmt, um die Bauteile 240, 246, 248, 252 fest auf das Fensterelement 126 zu klemmen. Die Verriegelungseinrichtung 204 weist einen Bolzen 256 auf, welcher das Hakenelement 232 an der Welle 206 befestigt. Die Welle 206 wird durch das Lager 260 aufgenommen, welches nach oben durch eine Spiralfeder 262 belastet wird, welche in einer Nabe 264 eines Verriegelungshebels 270 angeordnet ist. Der Verriegelungshebel 270 weist einen Griff 272, einen oberen Riegel 276 und einen unteren Riegel 278 auf. Der Griff 272 ist mit der Welle 234 über eine Stellschraube 279 verbunden.

Figur 6 zeigt die Blende 122 und das Fensterelement 126 nach unten in eine geschlossene Stellung geschwenkt.

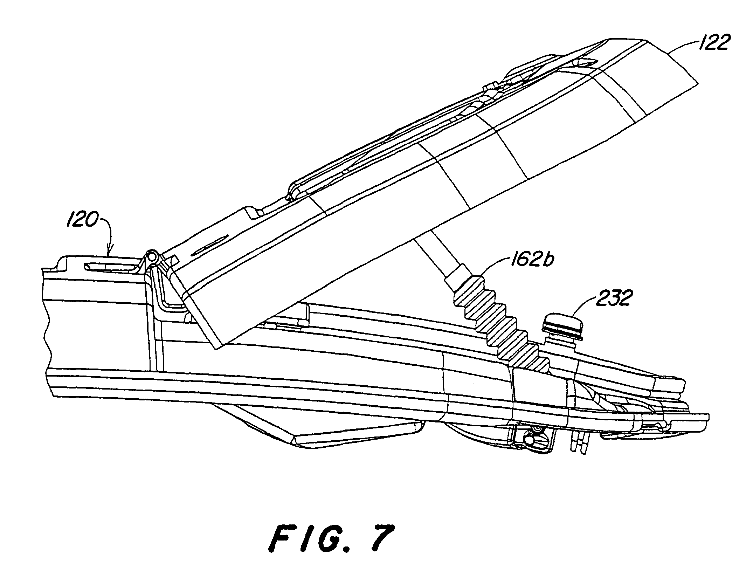

Figur 7 zeigt die Blende 122 mit Unterstützung durch die Streben 162a (hier nicht gezeigt) und 162b nach oben geschwenkt. Das Hakenelement 232 ist hier nicht mit der Blende 122 verbunden.

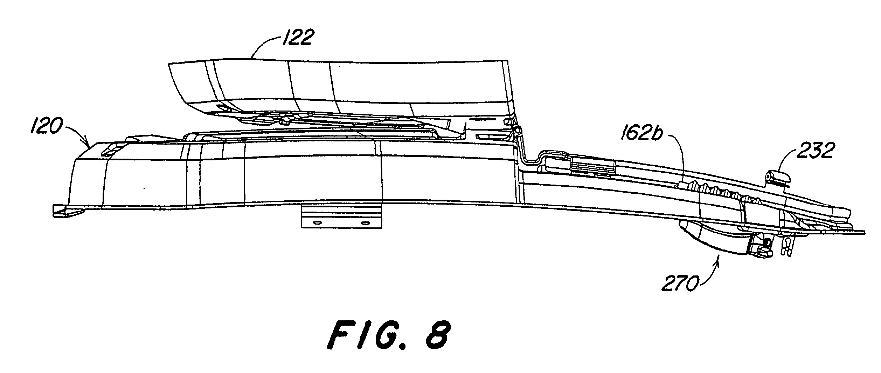

Figur 8 zeigt die Blende 122 um vollständige 180° aus ihrer geschlossenen Stellung in eine dargestellte, vollständig geöffnete Stellung verschwenkt. Die Streben 162a, 162b sind von den Zapfen 165a, 165b getrennt und liegen flach auf dem Dach 120. Die klippartigen Endbereiche 167 der Streben 162a, 162b und die Zapfen 165a, 165b sind derart ausgebildet, dass sie sich trennen, wenn genügend Kraft in Rückwärtsrichtung auf die Blende 122 ausgeübt wird. Dies verhindert Schäden an dem Dach 120 oder der Blende 122, wenn die Blende auf einen oberhalb liegenden Gegenstand trifft.

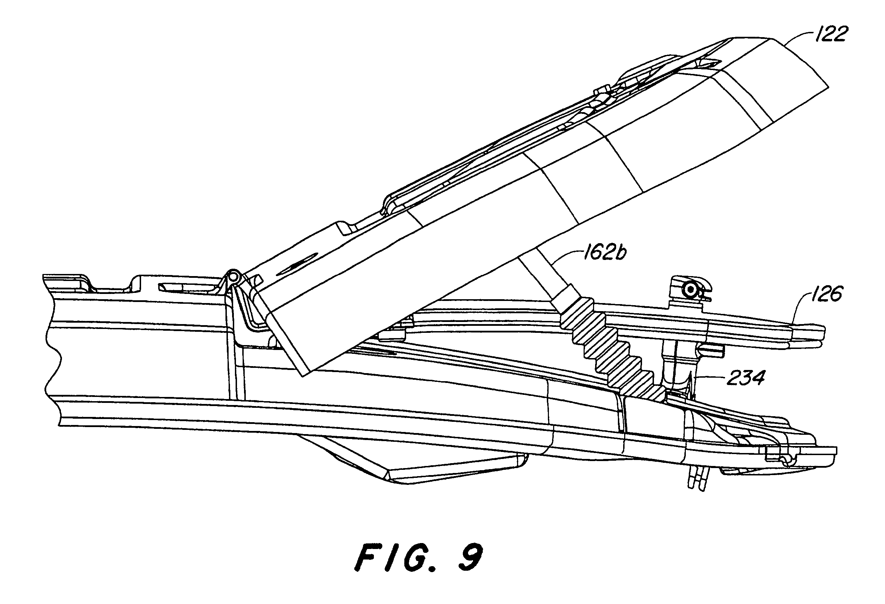

Figur 9 zeigt die Blende 122 im Winkel von etwa 45° nach oben geschwenkt und durch die Streben 162a, 162b oben gehalten. Das Fensterelement 126 wird um etwa 20° durch den unteren Riegel 278 (nicht gezeigt) nach oben geschwenkt gehalten.

Die Figuren 10A und 10B zeigen die Verriegelungseinrichtung 204 und einen Griffzusammenbau 300. Der Griffzusammenbau 300 weist eine Anbauplatte 301 auf, welche an dem Dach 120 angrenzend an die Öffnung 170 angebracht ist. Die Anbauplatte 301 ist vertikal ausgerichtet und trägt ein Verriegelungselement 308, welches sich horizontal erstreckende, flache H-förmige Konsolen 310, 213 trägt. Die Anbauplatte 310 ist an dem Dach 120 über Blechschrauben 320 angebracht. Eine Vertiefung 313, die zwischen den Konsolen 310, 312 bestimmt wird, kann entweder den oberen Riegel 276 oder den unteren Riegel 278 aufnehmen, abhängig von der für das Fensterelement 126 gewünschten Stellung. Die flachen H-förmigen Konsolen 310, 312 stellen eine Sperrstellung 315 zwischen den Schenkeln 310a, 310b, 312a, 312b der Konsolen 310, 312 zur Verfügung, um einen der Riegel 276, 278 zwischen den Konsolen 310, 312 zu halten. Das Verriegelungselement 308 wird vorzugsweise durch ein Kunststoffteil mit einer Basis 316 gebildet, welche über zwei Schrauben durch Gewindebohrungen in der Halteplatte 301 gehalten wird. Somit schließt oder hält der obere Riegel 276, wenn er in dem Schlitz zwischen den Konsolen 310, 312 angeordnet ist, das Fensterelement 126 dicht an dem Dach 120, wie dies in Figur 7 dargestellt wird. Wenn der untere Riegel 278 zwischen den Konsolen 310, 312 angeordnet ist, wird das Fensterelement 126 in einer erhöhten, nach oben verschwenkten Stellung gehalten, wie dies in Figur 9 gezeigt wird.

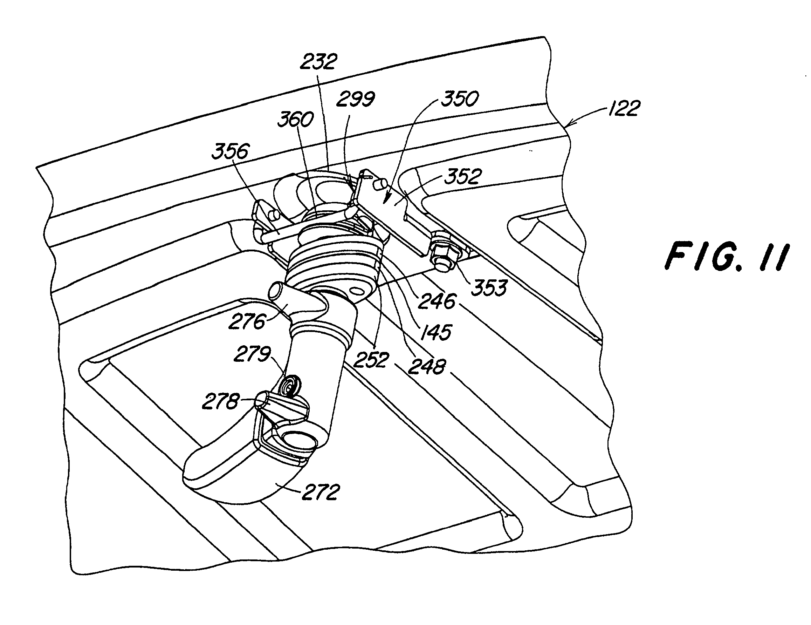

Figur 11 zeigt die Verriegelungseinrichtung 204, wobei das Hakenelement 232 gedreht wird, um an einer an der Blende 122 angeordneten Halterung 350 anzugreifen. Das Fensterelement 126 wird aus Gründen der Übersichtlichkeit nicht gezeigt, aber die Scheibe 145 ist teilweise zwischen den Dichtungen 246, 248 dargestellt. Die Halterung 350 weist einen Rahmen 352 auf, welcher mittels Befestigungsmitteln 353 an der Blende 122 angebracht ist und eine Querstrebe 356 stützt. Die Querstrebe 356 ist durch eine Drehfeder 299 (in den Fig. 14A - 15B dargestellt) federbelastet, um ein Eingreifen der Querstrebe 356 in einen Schlitz 360 des Hakenelements 232 zu erlauben. Das Hakenelement 232 kann gedreht werden, um die Querstrebe 356 freizugeben. In der in Figur 11 gezeigten Stelle, ist sowohl die Blende 122 als auch das Fensterelement 126 angehoben. Die Verriegelungseinrichtung 204 wird durch die Streben 162a, 162b nach oben getragen, um von dem Fensterelement 126 herabzuhängen.

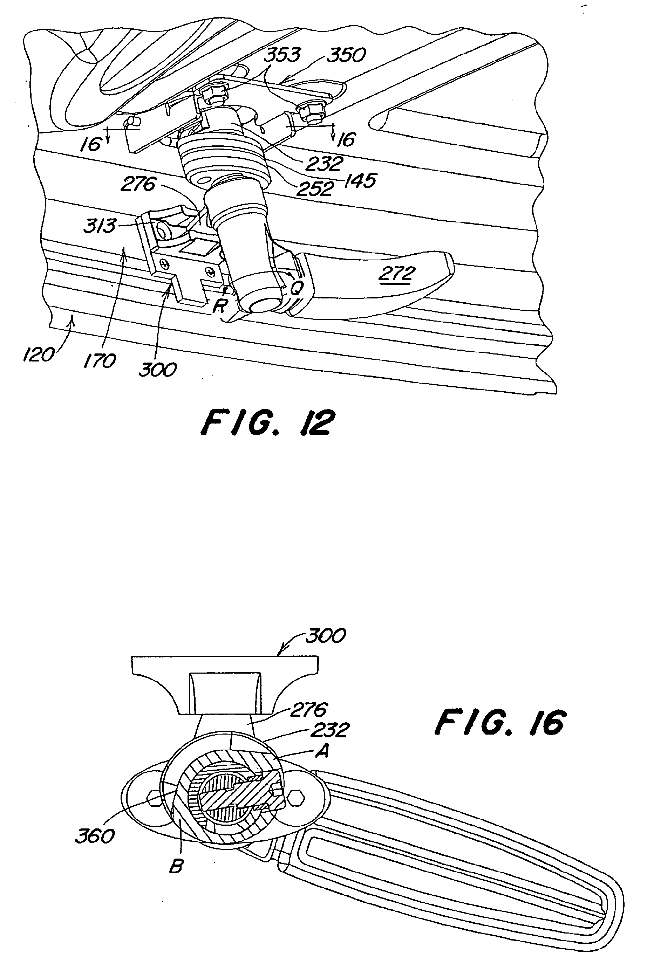

Figur 12 zeigt die Verriegelungseinrichtung 204 in einer Stellung, in der das Hakenelement 232 an der Blende 122 an- und der obere Riegel 276 in die Vertiefung 313 der Halterung 300 eingreift. Das Fensterelement 126 (hier aus Gründen der Übersichtlichkeit nicht gezeigt) und die Blende 122 sind sicher mit dem Dach 120 über der Öffnung 170 verbunden. Wenn der Griff in einem begrenzten Bereich in der Drehrichtung R geschwenkt wird, kann der obere Riegel 276 aus der Vertiefung 313 entfernt, der Griff 272 unter Mithilfe der Streben 162a, 162b angehoben und der untere Riegel 278 kann in die Vertiefung 313 durch eine umgekehrte Drehung in der Richtung Q eingesetzt werden. Die Blende 122 und das Fensterelement 126 können somit in einer gekippten, offenen Stellung gehalten werden.

Durch eine mehr als begrenzte Drehung aus der gezeigten Stellung in der Drehrichtung R wird nicht nur der Riegel 276 von der Vertiefung 313 trennt, sondern das Hakenelement 232 von der Querstrebe 356 der Blende 122 gelöst. Das Fensterelement 126 kann dann unabhängig von der Blende 122 bedient werden. Die freigegebene Blende 126 nimmt eine gekippte, offene Stellung durch die Kraft der Streben 162a, 162b ein.

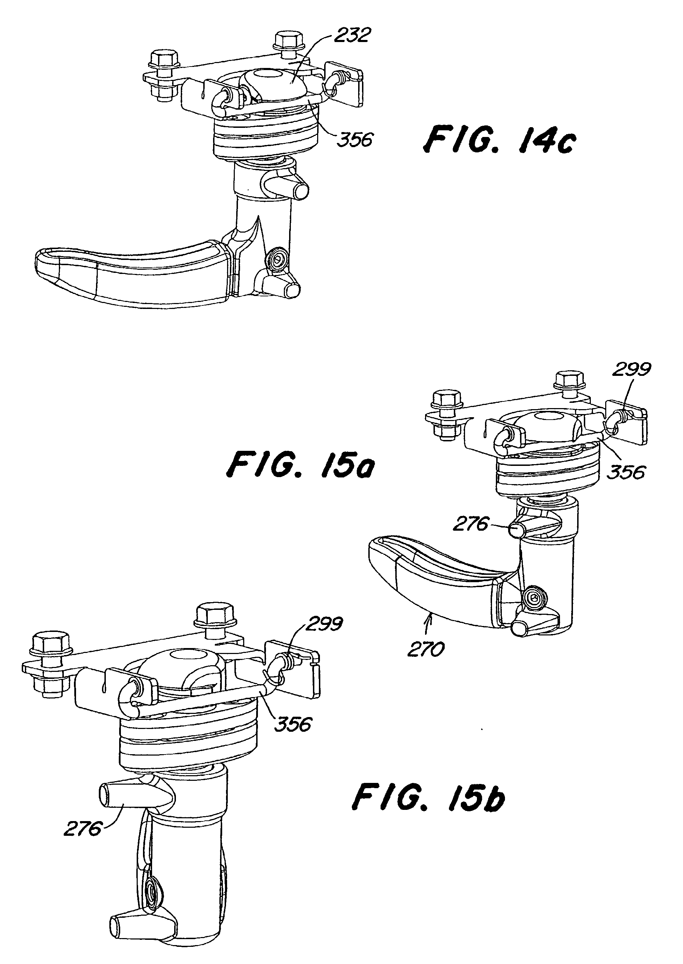

Die Figuren 14A-14C zeigen ein allmähliches Eingreifen des Hakenelements 232 an der Querstrebe 356. Die Querstrebe 356 kann um eine Linie zwischen ihren gegenüberliegenden Endbereichen in dem Rahmen 352 schwenken. Das Hakenelement 232 wird durch eine Feder 299 (Fig. 14A) dazu gedrängt, nach unten zu schwenken. Das Hakenelement 232 weist einen abgerundeten Kopfbereich auf, welcher die Querstrebe 356 berührt und die Querstrebe 356 durch Kraftaufwendung dazu drängt, nach oben zu schwenken (Fig. 14B) bis die Querstrebe 356 in die Vertiefung 360 durch ein durch die Feder 299 (Fig. 14C) erzwungenes Nachunten-Schwenken gleitet. Das Hakenelement 232 kann sich nicht weiter heben, um aufgrund eines Überkopf-Zusammentreffens mit der Sonnenblende 120 gelöst zu werden.

Die Figuren 15A und 15B zeigen das Lösen des Hakenelements 232 von der Querstrebe 356. In Figur 15A befindet sich die Verriegelung 276 in einer Stellung, um von der Vertiefung 313 des Griffs 300 getrennt zu werden. Das Fensterelement 126 und die Sonnenblende 122 können gemeinsam angehoben werden. In Fig. 15B wurde die Verriegelung 270 weiter gedreht und das Hakenelement 232 trennt sich von der Querstrebe 356. Die Blende 122 trennt sich von dem Fensterelement 126.

Figur 16 zeigt die Vertiefung 360, die sich um das Hakenelement 232 von einem Punkt A zu einem Punkt B erstreckt.

Aus dem Vorstehenden kann ersehen werden, dass zahlreiche Variationen und Änderungen durchgeführt werden können, ohne vom Schutzbereich der Erfindung abzuweichen. Es soll deutlich werden, dass keine Begrenzung auf die bestimmte Ausführungsform, die hier gezeigt wurde, beabsichtigt ist oder erschlossen werden soll. Es ist hingegen beabsichtigt, dass die folgenden Ansprüche, alle solchen Modifikationen abdecken sollen, die in den Schutzbereich der Ansprüche fallen.

## Patentansprüche

1. Dachlukenabdeckung für ein Fahrzeug (100), insbesondere ein Nutzfahrzeug, mit einer Blende (122) und einem Fensterelement (126) mit einer durchsichtigen Scheibe (145) zur Abdeckung einer Dachluke (170), **dadurch gekennzeichnet, dass** sowohl das Fensterelement (126) als auch die Blende (122) mit dem Dach schwenkbar verbindbar ist und wobei die Blende (122) zumindest bereichsweise oberhalb des Fensterelements (126) angeordnet ist, wobei das Fensterelement (126) und die Blende (122) eine gemeinsame Schwenkachse aufweisen, welche in einem einer Dachvorderkante abgewandten Bereich der Dachlukenabdeckung angeordnet ist.

2. Dachlukenabdeckung nach Anspruch 1, **gekennzeichnet durch** wenigstens eine Strebe (162a, 162b), vorzugsweise in der Art eines Gaszylinders, welche zwischen der Blende (122) und dem Dach (120) angeordnet ist und die Blende (122) in Richtung seiner geöffneten Stellung belastet.

3. Dachlukenabdeckung nach Anspruch 1 oder 2, **dadurch gekennzeichnet, dass** das Fensterelement (126) und die Blende (122) mit dem Dach (120) über Scharniere (136a, 136b, 142a, 142b) verbunden sind, welche über ein Befestigungsmittel (209) derart verbunden werden können, dass sie zusammen rotieren.

4. Dachlukenabdeckung nach einem oder mehreren der vorherigen Ansprüche, **gekennzeichnet durch** eine Verriegelungseinrichtung (204), welche an dem Fensterelement (126) und dem Dach (120) vorgesehen ist, welche das Fensterelement (126) wenigstens in einer verschwenkten und einer vollständig geschlossenen Stellung festlegen kann.

5. Dachlukenabdeckung nach Anspruch 4, **gekennzeichnet durch** einen Griff (272), welcher mit einer zumindest im Wesentlichen vertikal ausgerichteten Welle (206) verbunden ist, von der sich zumindest ein erster und ein zweiter Riegel (276, 278) radial weg erstrecken, und wenigstens einer Vertiefung (313), die direkt oder indirekt an dem Dach (120) vorgesehen ist, um einen der Riegel (276, 278) in Abhängigkeit von einem gewünschten Schwenkwinkel des Fensterelements (126) aufnehmen zu können.

6. Dachlukenabdeckung nach Anspruch 4 oder 5, **dadurch gekennzeichnet, dass** die Verriegelungseinrichtung (204) ein Hakenelement (232) aufweist, welches an einem äußeren Endbereich der Welle (206) angeordnet ist, und derart ausgebildet ist, dass es an der Blende (122) angreifen kann.

7. Dachlukenabdeckung nach einem oder mehreren der Ansprüche 4 bis 6, **dadurch gekennzeichnet, dass** die Verriegelungseinrichtung (204) eine Stellung, in der das Hakenelement (232) an der Blende (122) eingreift, eine Stellung, in der das Fensterelement (126) die Dachluke (170) verschließt und eine Stellung einnehmen kann, in der der zweite Riegel (278) in die Vertiefung (313) eingreift, wobei das Fensterelement (126) sich in einer geöffneten Stellung befindet.

## Claims

1. Roof hatch cover for a vehicle (100), in particular a commercial vehicle, comprising a screen (122) and a window element (126) having a transparent pane (145) for covering a roof hatch (170), **characterized in that** both the window element (126) and the screen (122) can be pivotably connected to the roof and **in that** the screen (122), at least in some areas, is disposed above the window element (126), the window element (126) and the screen (122) having a common pivot axis, which is disposed in a region of the roof hatch cover which is facing away from a roof front edge.

2. Roof hatch cover according to Claim 1, **characterized by** at least one strut (162a, 162b), preferably in the guise of a gas cylinder, which is disposed between the screen (122) and the roof (120) and pressurizes the screen (122) in the direction of its open setting.

3. Roof hatch cover according to Claim 1 or 2, **characterized in that** the window element (126) and the screen (122) are connected to the roof (120) by hinges (136a, 136b, 142a, 142b), which can be connected by a fastening means (209) such that they rotate in unison.

4. Roof hatch cover according to one or more of the previous claims, **characterized by** a locking mechanism (204), which is provided on the window element (126) and the roof (120) and which can secure the window element (126) at least in a pivoted and a fully closed setting.

5. Roof hatch cover according to Claim 4, **characterized by** a handle (272), which is connected to an at least substantially vertically aligned shaft (206), from which at least a first and a second bolt (276, 278) extend radially outwards, and at least one recess (313), which is disposed directly or indirectly on the roof (120) so as to be able to receive one of the bolts (276, 278) in dependence on a desired pivot angle of the window element (126).

6. Roof hatch cover according to Claim 4 or 5, **characterized in that** the locking mechanism (204) has a hook element (232), which is disposed on an outer end region of the shaft (206) and is configured such that it can act upon the screen (122).

7. Roof hatch cover according to one or more of Claims 4 to 6, **characterized in that** the locking mechanism (204) can assume a setting in which the hook element (232) engages on the screen (122), a setting in which the window element (126) closes the roof hatch (170), and a setting in which the second bolt (278) engages in the recess (313), in which case the window element (126) is in an open setting.

## Revendications

1. Couverture de toit ouvrant pour un véhicule (100), en particulier pour un véhicule utilitaire, comportant un cache (122) et un élément formant fenêtre (126) avec une vitre (145) transparente pour couvrir une baie de toit ouvrant (170), **caractérisée en ce que** tant l'élément formant fenêtre (126) que le cache (122) sont assemblés de manière pivotante avec le toit, et le cache (122) étant agencé au moins par zones au-dessus de l'élément formant fenêtre (126), l'élément formant fenêtre (126) et le cache (122) comportant un axe de pivotement commun, qui est disposé dans une zone de la couverture de toit ouvrant, laquelle est détournée du bord avant du toit.

2. Couverture de toit ouvrant selon la revendication 1, **caractérisée par** au moins un étai (162a, 162b), de préférence sous la forme d'un vérin à gaz, qui est agencé entre le cache (122) et le toit (120) et qui sollicite le cache (122) vers sa position ouverte.

3. Couverture de toit ouvrant selon la revendication 1 ou 2, **caractérisée en ce que** l'élément formant fenêtre (126) et le cache (122) sont assemblés au toit (120) par l'intermédiaire de charnières (136a, 136b, 142a, 142b), qui peuvent être assemblées entre elles par un moyen de fixation (209), de telle sorte qu'elles peuvent tourner conjointement.

4. Couverture de toit ouvrant selon une ou plusieurs des revendications précédentes, **caractérisée par** un dispositif de verrouillage (204), qui est prévu au niveau de l'élément formant fenêtre (126) et du toit (120) et qui peut immobiliser l'élément formant fenêtre (126) au moins dans une position basculée et une position totalement fermée.

5. Couverture de toit ouvrant selon la revendication 4, **caractérisée par** une poignée (272), qui est reliée à un arbre (206) orienté au moins sensiblement dans le sens vertical, duquel partent dans le sens radial un premier et un deuxième verrous (276, 278), et au moins un creux (313) qui est prévu directement ou indirectement sur le toit (120), afin de pouvoir recevoir l'un des verrous (276, 278) en fonction d'un angle de pivotement souhaité de l'élément formant fenêtre (126).

6. Couverture de toit ouvrant selon la revendication 4 ou 5, **caractérisée en ce que** le dispositif de verrouillage (204) comporte un élément en forme de crochet (232), qui est agencé sur une zone d'extrémité extérieure de l'arbre (206) et qui est configuré de telle sorte qu'il peut entrer en prise avec le cache (122).

7. Couverture de toit ouvrant selon une ou plusieurs des revendications 4 à 6, **caractérisée en ce que** le dispositif de verrouillage (204) peut être amené dans une position dans laquelle l'élément en forme de crochet (232) entre en prise avec le cache (122), une position dans laquelle l'élément formant fenêtre (126) ferme la baie de toit ouvrant (170) et une position dans laquelle le deuxième verrou (278) s'engage dans le creux (313), l'élément formant fenêtre (126) étant dans une position ouverte.
